# EUROPÄISCHE PATENTSCHRIFT

(11) **EP 4 153 891 B1**
(45) Veröffentlichungstag und Bekanntmachung des Hinweises auf die Patenterteilung: **03.07.2024**
(21) Anmeldenummer: 21728859.6
(22) Anmeldetag: 20.05.2021
(51) Int. Cl.: F16K 31/50

(54) **VERWENDUNG EINES KUGELGEWINDETRIEBS UND STELLANTRIEBSANORDNUNG**
USE OF A BALL SCREW DRIVE, AND ACTUATING DRIVE ASSEMBLY
UTILISATION D'UNE VIS À BILLES ET ENSEMBLE MÉCANISME DE COMMANDE

(30) Priorität: 22.05.2020 DE 102020113849; 29.07.2020 DE 102020120064
(43) Veröffentlichungstag der Anmeldung: 29.03.2023
(73) Patentinhaber: AUMA Riester GmbH & Co. KG, 79379 Müllheim (DE)
(72) Erfinder: HOFMANN, Benjamin, 79423 Heitersheim (DE); GRAF, Holger, 01705 Freital (DE)
(74) Vertreter: Mertzlufft-Paufler, Cornelius
(86) Internationale Anmeldenummer: PCT/EP2021/063532
(87) Internationale Veröffentlichungsnummer: WO 2021/234116

(56) Entgegenhaltungen:
- US-A1- 2018 058 602
- US-A1- 2019 376 610
- US-B1- 10 060 548

## Beschreibung

Die Erfindung betrifft eine Verwendung eines Kugelgewindetriebs zum Betätigen einer selbstschließenden, linear betätigten Armatur sowie eine Stellantriebsanordnung, die einen Stellantrieb, einen mit dem Stellantrieb angetriebene Kugelgewindetrieb und eine linear betätigte Armatur umfasst.

Derartige Armaturen werden beispielsweise bei Öl- und Gasförderanlagen eingesetzt. Hier ist es bekannt, Armaturen einzusetzen, die einerseits selbstschließend durch Druckbelastung ausgebildet sind und andererseits mit einer sogenannten Fail-Safe-Funktion ausgestattet sind, die auch im drucklosen Zustand ein Schließen der Armatur, beispielsweise im Havariefall, erlaubt.

Aus der US 2018/058602 A1 sind ein elektrisches Betätigungssystem und ein Verfahren bekannt, deren Ausführungsformen einen Aktuator mit einem Motor umfassen, der eine Antriebskraft zur Steuerung eines Ventils erzeugt.

Aus der US 2019/376610 A1 ist eine Ventilanordnung mit einem Ventilkörper und einem Ventilelement bekannt, das so konfiguriert ist, dass es sich zwischen einer offenen und einer geschlossenen Position bewegt.

Aus der US 10 060 548 B1 ist ein Drehmomentreduzierer für Hochdruckschieber bekannt, der eine Kugelumlaufspindel-Baugruppe und eine Kolbengetriebe-Baugruppe mit einem niedrigen Drehmoment umfasst, die es einem einzelnen Benutzer ermöglicht, ein Handrad zu betätigen, um einen Schieber unter sehr hohem Druck zu öffnen oder zu schließen, ohne dass eine Getriebeuntersetzung und eine Ausgleichsspindel erforderlich sind.

Bisher war es üblich, die Betätigung der Armaturen hydraulisch oder pneumatisch vorzunehmen. Die dabei verwendeten hydraulischen Komponenten sind jedoch vergleichsweise teuer und zudem auch wartungsintensiv.

Die Aufgabe der Erfindung besteht nun darin, Alternativen zur hydraulischen Betätigung derartiger Armaturen zu schaffen.

Zur Lösung dieser Aufgabe wird zunächst die Verwendung eines Kugelgewindetriebs zum Betätigen einer selbstschließenden, linear betätigten Armatur vorgeschlagen, welche die Merkmale des unabhängigen, auf eine derartige Verwendung gerichteten Anspruchs aufweist. Insbesondere wird zur Lösung der Aufgabe somit die Verwendung eines Kugelgewindetriebs zum Betätigen einer selbstschließenden, linear betätigten Armatur vorgeschlagen, wobei eine Mutter des Kugelgewindetriebs zum Öffnen der Armatur elektromotorisch angetrieben wird, um dadurch eine Spindel des Kugelgewindetriebs translatorisch in Öffnungsrichtung der Armatur zu bewegen und die Armatur zu öffnen. Zum Schließen der Armatur wird eine lineare Rückstellbewegung, beispielsweise eine Entspannungsbewegung, auf die Spindel übertragen. Durch die Übertragung der linearen Rückstellbewegung auf die Spindel kann sich ergeben, dass die Mutter des Kugelgewindetriebs von der Spindel angetrieben wird.

Bei der Verwendung des Kugelgewindetriebs ist somit vorgesehen, dass zum Öffnen der Armatur ein elektromotorischer Antrieb, beispielsweise ein Antriebsmotor eines Stellantriebs, der mit dem Kugelgewindetrieb verbunden ist, benutzt wird. Die Armatur ist, wie bereits zuvor erwähnt, selbstschließend. Dies kann beispielsweise durch einen auf die Armatur wirkenden Betriebsdruck eines Fördermediums, beispielsweise von zu förderndem Öl oder Gas, oder auch durch eine Rückstellbewegung und Rückstellkraft einer weiter unten noch näher erläuterten Rückstelleinheit erfolgen. Im Havariefall, also beispielsweise bei Stromausfall, wenn ein elektromotorischer Antrieb der Mutter des Kugelgewindetriebs zum notwendigen Schließen der Armatur nicht mehr verwendet werden kann, ist es vorgesehen, die auf die Spindel des Kugelgewindetriebs übertragebare Rückstellbewegung zu nutzen, um die Armatur zu schließen. In diesem Zusammenhang ist es vorteilhaft sein, wenn der Kugelgewindetrieb nicht selbsthemmend ist. Auf diese Weise kann eine translatorische Rückstellbewegung der Spindel entgegen der Öffnungsrichtung der Armatur in eine Rotation der Mutter des Kugelgewindetriebs und auch in eine Rotation eines angeschlossenen Antriebsmotors umgesetzt werden. Dies kann bewirken, dass die Rückstellbewegung zum Schließen der Armatur abgebremst wird. Es kann vor allem dann abgebremst werden, wenn eine Schließbewegung der Armatur mit zu hoher Geschwindigkeit aufgrund vergleichsweise großer Rückstellkraft erfolgt. Auf diese Weise können der Kugelgewindetrieb, die Armatur und auch ein möglicherweise an den Kugelgewindetrieb angeschlossener Stellantrieb mit seinen Komponenten vor Beschädigungen geschützt werden.

Die zuvor erwähnte Rückstellbewegung kann beispielsweise eine Entspannungsbewegung sein, die durch ein durch die Armatur geschaltetes Druckmedium vermittelt wird. In der Regel steht das durch die Armatur geschaltete Medium, beispielsweise Öl oder auch Gas, unter Druck. Der Druck des Mediums kann dazu verwendet werden, die Armatur in ihre Schließstellung zurück zu bewegen. Die dabei von der Armatur oder einem Schließelement der Armatur durchgeführte Rückstellbewegung kann, wie bereits erwähnt, auf die Spindel übertragen werden.

Bei einer anderen Ausführungsforum der Verwendung ist vorgesehen, dass die Rückstellbewegung eine Entspannungsbewegung einer Rückstelleinheit ist. Dabei kann die Rückstelleinheit zumindest ein Rückstellelement, beispielsweise eine Feder, umfassen. Beim Öffnen der Armatur, das über den elektromotorischen Antrieb der Mutter und die translatorische Bewegung der Spindel in Öffnungsrichtung erfolgen kann, können die Rückstelleinheit und ihr zumindest ein Rückstellelement gespannt werden. Im Havariefall, also wenn ein elektromotorischer Antrieb nicht mehr möglich oder nicht mehr gewünscht ist, kann alleine die in der Rückstelleinheit durch die Vorspannung des Rückstellelements gespeicherte Antriebsenergie genutzt werden, um die Rückstellbewegung, insbesondere die Entspannungsbewegung auszuführen und zum Schließen der Armatur auf die Spindel zu übertragen. Durch die Rückstellbewegung weicht die Spindel, welche die Armatur in ihrer Offenstellung halten kann, in eine der Schließstellung zugeordnete Ausgangsposition zurück, sodass die Armatur bedingt durch einen Druck des Druckmediums und/oder bedingt durch die Rückstellkraft der Rückstelleinheit, selbsttätig geschlossen werden kann, ohne einen elektromotorischen Antrieb zu nutzen.

Um die beim Öffnen und Schließen der Armatur verwendeten Komponenten, also beispielsweise den Kugelgewindetrieb, einen an den Kugelgewindetrieb angeschlossenen Stellantrieb mit seinen Komponenten und letztendlich auch die Armatur mit Ihren Komponenten vor Beschädigungen schützen zu können, kann es zweckmäßig sein, eine durch die Rückstellbewegung in die Spindel eingeleitete Rückstellkraft in Kraftrichtung hinter dem Kugelgewindetrieb und/oder durch den Kugelgewindetrieb zumindest teilweise zu dissipieren. Auf diese Weise kann die Rückstellungbewegung der Armatur in ihre Schließstellung abgebremst werden.

Erfindungsgemäß ist in diesem Zusammenhang vorgesehen, dass die Dissipation der zuvor erwähnten Rückstellkraft durch eine Bremse, nämlich eine Fliehkraftbremse erfolgt. Dies kann beispielsweise eine Bremse eines mit dem Kugelgewindetriebs verbundenen Stellantriebs sein.

Zur Schonung der beteiligten Komponenten kann es ferner vorteilhaft sein, wenn die Spindel am Ende der Rückstellbewegung weiterlaufen und sich von einer Verbindung zur Armatur axial lösen kann. Auf diese Weise ist es möglich, einen Bewegungsimpuls der Spindel und ggf. auch der mit ihr verbundenen Komponenten abzubauen. So lässt sich vermeiden, dass die Spindel ungebremst gegen einen Anschlag fährt und dabei Beschädigungen an den mit ihr verbundenen Komponenten verursacht.

Zur Lösung der Aufgabe wird auch eine Stellantriebsanordnung der eingangsgenannten Art vorgeschlagen, welche die Mittel und Merkmale des unabhängigen, auf eine derartige Stellantriebsanordnung gerichteten Anspruchs aufweist. Zur Lösung der Aufgabe wird somit eine Stellantriebsanordnung mit einem Stellantrieb, einen mit dem Stellantrieb angetriebenen Kugelgewindetrieb und einer linear betätigten Armatur vorgeschlagen, wobei der Kugelgewindetrieb eine Mutter und zumindest mittelbar mit der Armatur verbindbare oder verbundene Spindel umfasst, wobei die Armatur mittels einer in Öffnungsrichtung der Armatur gerichteten Öffnungsbewegung der über den Stellantrieb und die Mutter angetriebenen Spindel öffenbar und mittels einer in Schließrichtung der Armatur auf die Spindel wirkenden, von einer Rückstelleinheit verursachten Rückstellbewegung, schließbar ist.

Der Kugelgewindetrieb kann dabei Teil eines modular nachrüstbaren und/oder entfernbaren linearen Antriebssystems sein, das an einen bestehenden Stellantrieb angeschlossen werden kann. Der Stellantrieb kann Teil einer mit der Armatur in Gebrauchsstellung verbundenen Fail-Safe-Einheit sein, die ein selbsttätiges Schließen der Armatur im Havariefall begünstig.

Während die Öffnungsbewegung der Armatur bei der Stellantriebsanordnung durch einen Antriebsmotor des Stellantriebs elektromotorisch erfolgt, wird zum Schließen der Armatur eine von der Rückstelleinheit erzeugte Rückstellbewegung auf die Spindel des Kugelgewindetriebs und über die Mutter des Kugelgewindetriebs gegebenenfalls auch auf einen angeschlossenen Antriebsmotor des Stellantriebs rückübertragen. Dabei weicht dann die zum Öffnen der Armatur translatorisch in Öffnungsrichtung bewegte Spindel in entgegengesetzter Richtung zurück und schafft Raum, damit die Armatur, insbesondere ein Schließelement der Armatur, entgegen der Öffnungsrichtung in Schließstellung gebracht werden kann. Das Schließen der Armatur kann, wie bereits zuvor erläutert wurde, beispielsweise durch einen Druck des mit der Armatur geschalteten Mediums, also beispielsweise durch den Druck des Mediums, das mit der Armatur geschaltet wird, geschlossen werden. Es ist aber auch möglich, die Rückstelleinheit, deren Rückstellbewegung auf die Spindel übertragen wird, zum Schließen der Armatur zu verwenden.

Zu diesem Zweck kann die Rückstelleinheit zumindest ein Rückstellelement, beispielsweise eine Rückstellfeder aufweisen. Die Rückstellbewegung kann eine Rückstellbewegung und/oder eine Entspannungsbewegung des zumindest einen Rückstellelements sein. Beim Öffnen der Armatur, was, wie bereits ausführlich erwähnt wurde, elektromotorisch durch den an den Kugelgewindetrieb angeschlossenen Antriebsmotor des Stellantriebs erfolgen kann, lässt sich das zumindest eine Rückstellelement der Rückstelleinheit spannen. Zum Schließen der Armatur wird das zumindest eine Rückstellelement der Rückstelleinheit entspannt, sodass dieses dann eine Entspannungsbewegung ausführt, die zum Zurückstellen der Spindel verwendet werden kann. Bei einer Ausführungsform der Stellantriebsanordnung ist vorgesehen, dass die Rückstelleinheit und der Stellantrieb in eine Fail-Safe-Einheit integriert sind. Auf diese Weise bilden der Stellantrieb und die Rückstelleinheit als Fail-Safe-Einheit eine kompakte, ggf. sogar in einem gemeinsamen Gehäuse angeordnete Funktionseinheit der Stellantriebsanordnung.

Die Stellantriebsanordnung, insbesondere der Stellantrieb, kann dabei Endanschläge und/oder Endlagenschalter für die Armatur aufweisen. Die Endanschläge und/oder Enlagenschalter können Endlangen der Armatur definieren.

Die Stellantriebsanordnung, insbesondere der Stellantrieb, kann einen Drehgeber zur Erfassung von Endlagen der Armatur aufweisen. Dabei kann der Drehgeber zum Abgreifen einer Drehbewegung der Mutter und/oder zur Umwandlung der Drehbewegung in eine auf Endanschläge und/oder auf Enlagenschalter wirkende Linearbewegung eingerichtet sein. Grundsätzlich ist es auch denkbar, die Drehbewegung an anderen Komponenten der Stellantriebsanordnung zu erfassen - beispielsweise im oder am Stellantrieb.

Über den Drehgeber ist es möglich, Endlagen der Armatur zumindest mittelbar zu erfassen. Bei der Inbetriebnahme der Armatur kann diese zwischen ihrer Offenstellung und Schließstellung zu bewegen, um die entsprechenden Stellungen des Drehgebers für die zukünftige Überwachung der Stellung der Armatur zu registrieren. Auf diese Weise ist es möglich, über den Drehgeber eine Rückmeldung an eine Leitzentrale zu geben, um die Stellung der Armatur zentral zu überwachen.

Je nach Anwendungsfall können die über die Rückstelleinheit und/oder die Armatur auf die Spindel übertragenen Rückstellkräfte vergleichsweise hoch sein. Daher kann es vorteilhaft sein, wenn die Mutter des Kugelgewindetriebs, an der sich die Spindel abstützt, mittels zumindest eines Axiallagers gelagert ist, das zur Aufnahme von durch die Rückstellbewegung auf die Spindel übertragenen Axialkräften eingerichtet ist.

Bei einer besonders vorteilhaften Ausführungsform der Stellantriebsanordnung ist vorgesehen, dass die Spindel eine Gewindesteigung von 16mm aufweist. Eine Gewindesteigung von 16mm hat sich als vorteilhafter Kompromiss zwischen einer mit der Steigung verbundenen Reibung zwischen Spindel und Mutter und einer zum Öffnen der Armatur elektromotorisch aufzubringenden Antriebkraft eines Antriebsmotors des Stellantriebs herausgestellt.

Weist die Spindel eine kleinere Gewindesteigung als 16mm auf, können Reibungskräfte zwischen Spindel und Mutter möglicherweise so hoch sein, dass ein selbsttätiges Schließen der Armatur, insbesondere im Havariefall, beeinträchtigt wird. Bei einer Gewindesteigung, die größer als 16mm ist, beispielsweise 20mm, kann eine vergleichsweise hohe Motorkraft erforderlich sein, um die Spindel gegen die Wirkung der Rückstelleinheit und/oder gegen einen möglicherweise an der Armatur anliegenden Druck zu verstellen und die Armatur zu öffnen.

Um eine auf die Spindel übertragene Rückstellkraft dissipieren zu können, ist erfindungsgemäß vorgesehen, dass die Stellantriebsanordnung, insbesondere der Stellantrieb eine Bremseinheit mit zumindest einer Bremse aufweist. Die Bremseinheit weist erfindungsgemäß eine Fliehkraftbremse auf, kann aber auch eine Arbeitsstrombremse umfassen. Die Verwendung einer Fliehkraftbremse ist vorteilhaft, wenn die Rückstellbewegung, die auf die Spindel übertragen wird, vergleichsweise schnell ist. Je höher die Geschwindigkeit ist, mit der die Spindel zurückbewegt wird, umso höher kann eine auf die Fliehkraftbremse wirkende Rotationsgeschwindigkeit einer Antriebswelle des Antriebsmotors des Stellantriebs sein, sodass dann eine entsprechend hohe Bremskraft von der Fliehkraftbremse aufgebracht wird. Auf diese Weise ergibt sich ein selbstregulierendes Bremsverhalten, das über einen großen Geschwindigkeitsbereich bereitstehen kann.

Bei einer Ausführungsform der Stellantriebsanordnung ist zwischen einem Antriebsmotor des Stellantriebs und dem Kugelgewindetrieb ein Getriebe, beispielsweise ein Planetengetriebe und/oder ein Schneckengetriebe angeordnet. Das Getriebe ist vorzugsweise nicht selbsthemmend, um die zuvor erwähnte Rückstellbewegung, die auf die Spindel übertragen wird, nicht zu verhindern.

Zwischen dem Kugelgewindetrieb, insbesondere der Spindel, und der Rückstelleinheit ist erfindungsgemäß eine lösbare Schnittstelle ausgebildet, die beim Schließen und/oder Öffnen der Armatur öffenbar ist. Das Lösen der Schnittstelle kann
beispielsweise durch in Schließrichtung und/oder in Öffnungsrichtung wirkende Zugkräfte erfolgen. Ferner kann die Schnittstelle zur Übertragung von Druckkräften in Schließrichtung und in Öffnungsrichtung eingerichtet sein. Auf diese Weise ist es möglich, beim Öffnen der Armatur über die Spindel zumindest mittelbar Druckkräfte auf die Armatur aufzubringen, um diese in Öffnungsstellung zu bewegen und/oder dort zu halten. Bei der Rückstellbewegung kann über die zuvor erwähnte Schnittstelle erneut eine Druckkraft übertragen werden, die dann allerdings in Schließrichtung ausgerichtet ist und dazu führt, dass die Spindel ohne elektromotorischen Antrieb zurückbewegt werden kann. Das Lösen der Schnittstelle ermöglich ein Nachlaufen der Spindel und kann die Spindel, die Mutter, den Stellantrieb sowie die Armatur und ihre jeweiligen Komponenten von Beschädigungen schützen.

Bei einer Ausführungsform der Stellantriebsanordnung ist vorgesehen, dass die Stellantriebsanordnung, insbesondere die zuvor erwähnte Schnittstelle, zur Drehfixierung der Spindel eingerichtet ist. Auf diese Weise wird verhindert, dass sich die Spindel im Zusammenspiel mit der Mutter unter Einwirkung der Rückstellbewegung der Rückstelleinheit dreht. Die Schnittstelle kann ein Führungselement, beispielsweise eine Passfeder oder eine Zahnwellenverbindung, aufweisen, das einen Abtrieb der Rückstelleinheit mit der Spindel koppelt.

Dabei kann das Führungselement ein Axialspiel aufweisen, das so bemessen ist, dass eine Drehfixierung der Spindel beim Öffnen und Schließen der Armatur erhalten bleibt. Die Drehfixierung beim Öffnen und Schließen der Armatur kann selbst dann erhalten bleiben, wenn die Schnittstelle, wie zuvor erwähnt, beim Öffnen und/oder Schließen der Armatur gelöst wird.

Bei einer Ausführungsform der Stellantriebsanordnung ist zur Drehfixierung der Spindel eine in einem Gehäuseteil der Stellantriebsanordnung drehfixierte Buchse vorgesehen. Die Buchse kann eine Relativdrehung zwischen der Spindel und der Buchse und/oder zwischen der Spindel und dem Gehäuseteil verhindern. Die Buchse kann axial verschieblich in dem Gehäuseteil gelagert und/oder axial an der Spindel fixiert ist. So kann mithilfe der Buchse eine zuverlässige Drehfixierung der Spindel zumindest über einen relevanten Teil des axialen Verstellbereichs der Spindel, vorzugsweise über den gesamten axialen Verstellbereich der Spindel, bereitgestellt werden. Es kann auch vorgesehen sein, dass die Buchse axial verschieblich auf der Spindel angeordnet ist. Hierbei kann die Buchse beispielsweise axial verschieblich oder axial fixiert in dem Gehäuseteil angeordnet sein.

Ein Axialhub der Armatur zwischen ihrer Offenstellung und ihrer Schließstellung und/oder ein Axialhub der Spindel können so bemessen sein, dass Kugeln des Kugelgewindetriebs in dem Kugelgewindetrieb keinen vollen Umlauf vollführen können. Somit kann bei kurzer Hubhöhe eine große Anzahl von gleichzeitig belastbaren Kugeln im Kugelgewindetrieb bereitgehalten werden. Dies ist besonders günstig bei der erfindungsgemäß vorgesehen Belastung der Spindel des Kugelgewindetriebs im Rückwärtsantrieb durch die Armatur und/oder die Rückstelleinheit.

Die Erfindung wird nachfolgend anhand von Ausführungsbeispielen näher beschrieben, ist aber nicht auf diese Ausführungsbeispiele beschränkt. Weitere Ausführungsbeispiele ergeben sich durch Kombination der Merkmale einzelner oder mehrerer Schutzansprüche untereinander und/oder in Kombination einzelner oder mehrerer Merkmale des Ausführungsbeispiels. Es zeigen in teilweise stark schematisierter Darstellung:

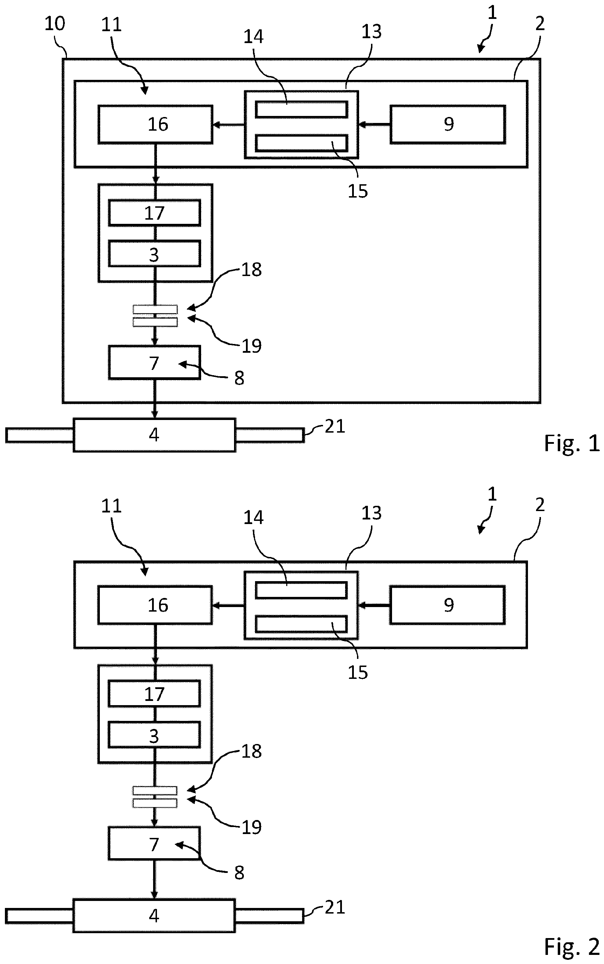

- Fig. 1:: ein Blockschaltbild zur Veranschaulichung einer ersten Ausführungsform einer Stellantriebsanordnung mit einem Stellantrieb, einem Linearantriebssystem mit einem Kugelgewindetrieb, mit einer Rückstelleinheit und mit einer Armatur, wobei die Rückstelleinheit und der Stellantrieb in einer Fail-Safe-Einheit integriert ist,
- Fig. 2:: ein Blockschaltbild zur Veranschaulichung einer weiteren Ausführungsform einer Stellantriebsanordnung mit einem Stellantrieb, einem Linearantriebssystem mit einem Kugelgewindetrieb, mit einer Rückstelleinheit und mit einer Armatur, wobei die Rückstelleinheit als separates Modul zwischen dem Stellantrieb und der Armatur ausgebildet ist,

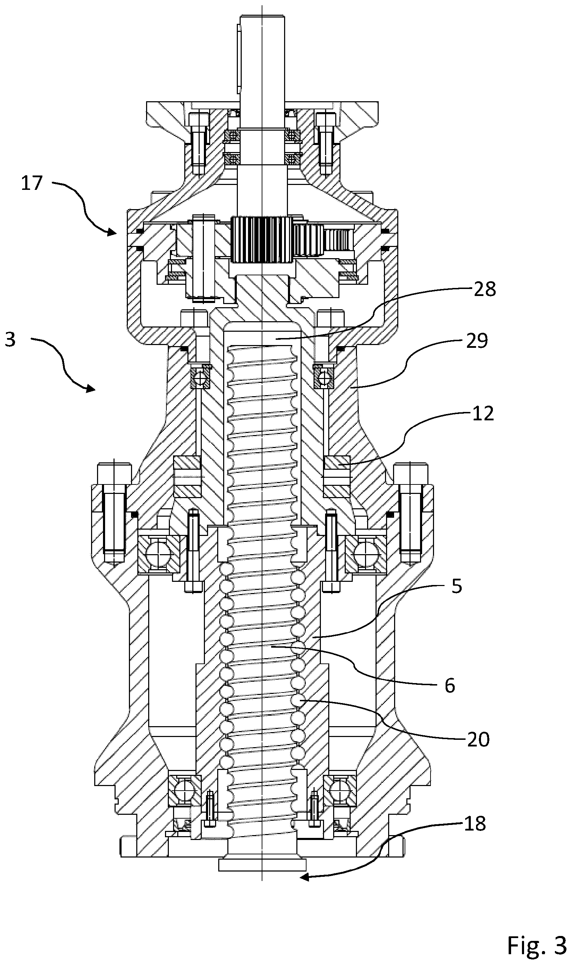

- Fig. 3:: eine Schnittdarstellung eines Kugelgewindetriebs einer erfindungsgemäßen Stellantriebsanordnung, sowie

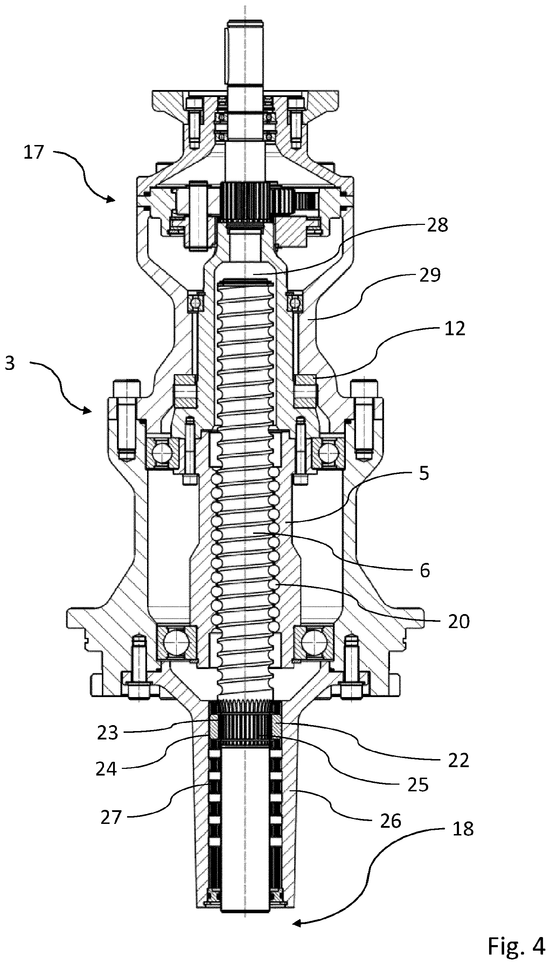

- Fig. 4:: eine Schnittdarstellung einer weiteren Ausführungsform eines Kugelgewindetriebs einer erfindungsgemäßen Stellantriebsanordnung, wobei hier eine Spindel des Kugelgewindetriebs mittels einer Innenverzahnung einer Buchse, durch die die Spindel verläuft, drehgesichert ist.

Bei der nachfolgenden Beschreibung verschiedener Ausführungsformen der Erfindung erhalten in ihrer Funktion übereinstimmende Elemente auch bei abweichender Gestaltung oder Formgebung übereinstimmende Bezugszahlen.

Die Figuren zeigen zumindest Teile von im Ganzen jeweils mit 1 bezeichneten Stellantriebsanordnungen.

Jede der gezeigten Stellantriebsordnungen 1 umfasst einen Stellantrieb 2, einen mit dem Stellantrieb 2 angetriebenen Kugelgewindetrieb 3 und eine linear betätigte Armatur 4.

Der Kugelgewindetrieb 3 umfasst eine Mutter 5 und eine zumindest mittelbar mit der Armatur 4 verbundene Spindel 6.

Die Armatur 4 ist mittels einer in Öffnungsrichtung der Armatur 4 gerichteten Öffnungsbewegung der über den Stellantrieb 2 und die Mutter 5 angetriebenen Spindel 6 öffenbar. Mittels einer in Schließrichtung der Armatur 4 auf die Spindel 6 wirkendenden, von einer Rückstelleinheit 7 verursachten Rückstellbewegung kann die Armatur 4 wieder geschlossen werden. Die Rückstelleinheit 7 umfasst zumindest ein Rückstellelement 8, beispielsweise eine Rückstellfeder. Die Rückstellbewegung, die beim Schließen der Armatur 4 auf die Spindel 6 einwirkt, ist hierbei eine Rückstellbewegung und/oder eine Entspannungsbewegung des Rückstellelements 8 der Rückstelleinheit 7.

Der Kugelgewindetrieb 3 ist mit einem Antriebsmotor 9 des Stellantriebs 2 antreibbar. Bei der in Figur 1 gezeigten Stellantriebsordnung 1 sind die Rückstelleinheit 7 und der Stellantrieb 2 in eine Fail-Safe-Einheit 10 integriert. Bei dem in Figur 2 gezeigten Ausführungsbeispiel einer Stellantriebsanordnung 1 wird eine separate Rückstelleinheit 7 verwendet.

Die Stellantriebsanordnung 1, hier der jeweilige Stellantrieb 2, umfasst Endlagenschalter für die Armatur 4. Die Endlagenschalter können Endlagen der Armatur 4 definieren.

Die Stellantriebe 2 der in den Figuren gezeigten Stellantriebsanordnungen 1 weisen jeweils einen Drehgeber 11 auf. Die Drehgeber 11 sind zur Erfassung von Endlagen der jeweiligen Armatur 4 eingerichtet. Dabei ist es möglich, mit Hilfe der Drehgeber 11 eine Drehbewegung der jeweiligen Mutter 5 abzugreifen und in eine auf Endanschläge wirkende Linearbewegung umzurechnen.

Figur 3 verdeutlicht, dass die Mutter 5 des dort gezeigten Kugelgewindetriebs 3 auch mittels eines Axiallagers 12 gelagert ist. Das Axiallager 12 ist so angeordnet, dass es zur Aufnahme von durch die Rückstellbewegung auf die Spindel 6 übertragenen Axialkräften eingerichtet ist. Auf diese Weise ist es möglich, vergleichsweise hohe Rückstellkräfte von der Spindel 6 auf die Mutter 5 zu übertragen.

Die in den Figuren 3 und 4 dargestellten Spindeln 6 weisen eine Gewindesteigung von 16mm auf.

Gemäß den beiden Blockschaltbildern der Figuren 1 und 2 umfasst jeder der gezeigten Stellantriebe 2 eine Bremseinheit 13. Die Bremseinheiten 13 umfassen jeweils eine Arbeitsstrombremse 14 und eine Fliehkraftbremse 15.

Zwischen dem Antriebsmotor 9 des Stellantriebs 2 und dem Kugelgewindetrieb 3 sind zwei Getriebe, nämlich ein Schneckengetriebe 16 und ein Planetengetriebe 17 vorgesehen. Sowohl das Schneckengetriebe 16 als auch das Planetengetriebe 17 sind jeweils nicht selbsthemmend ausgebildet. Mit Hilfe des Schneckengetriebes 16 kann die Rotation einer Abtriebswelle des Antriebsmotors 9 des Stellantrieb 2 um 90° umgelenkt werden. Mit Hilfe des Planetengetriebes 17 ist eine Untersetzung der über das Schneckengetriebe 16 in das Planetengetriebe 17 eingespeisten Drehzahl möglich. Die Drehzahl, die von dem Planetengetriebe 17 an die Mutter 5 des Kugelgewindetriebs 3 zum Antrieb der Spindel 6 übertragen wird, ist damit niedriger als die Drehzahl, mit der die Abtriebswelle des Antriebsmotor 9 des Stellantriebs 2 rotiert. Durch die von dem Planetengetriebe 17 bereitgestellte Untersetzung liegt jedoch an der Mutter 5 dann ein höheres Drehmoment an, sodass durch die Betätigung der Spindel 6 nicht nur die Armatur 4 aus ihrer Schließstellung in ihre Offenstellung, sondern auch die Rückstellkraft der Rückstelleinheit 7 überwunden werden können.

Die Figuren 1 und 2 verdeutlichen, dass zwischen dem Kugelgewindetrieb 3, nämlich zwischen der Spindel 6 des Kugelgewindetriebs 3, und der Rückstelleinheit 7 eine lösbare Schnittstelle 18 ausgebildet ist. Die lösbare Schnittstelle 18 kann beim Schließen der Armatur geöffnet werden. Dies geschieht durch in Schließrichtung und auch in Öffnungsrichtung jeweils wirkende Zugkräfte, die auf die Schnittstelle 18 wirken. Insbesondere dann, wenn die Armatur 4 geschlossen wird und die Spindel 6 auf Grund ihrer Massenträgheit und/oder der Massenträgheit des Antriebsmotors 9 möglicherweise noch etwas nachläuft, kann sich die lösbare Schnittstelle 18 zwischen der Spindel 6 und der Rückstelleinheit 7 öffnen.

Um die Armatur 4 mit Hilfe der Spindel 6 in ihre Offenstellung zu bringen und die Spindel 6 mit Hilfe der Rückstelleinheit 7 beim selbsttätigen Schließen der Armatur 4 zu beaufschlagen und die Rückstellbewegung der Rückstelleinheit 7 auf die Spindel 6 zu übertragen, ist die Schnittstelle 18 zur Übertragung von Druckkräften in Schließrichtung und in Öffnungsrichtung eingerichtet.

Um zu verhindern, dass sich die Spindel 6 bei axialer Belastung relativ zu der sie antreibenden Mutter 5 dreht, ist die Schnittstelle 18 darüber hinaus auch zur Drehfixierung der Spindel 6 eingerichtet. Zu diesem Zweck weist die Schnittstelle 18 ein Führungselement 19 auf, das beispielsweise als Passfeder ausgebildet sein kann. Mit Hilfe des Führungselements 19 ist die Schnittstelle 18 dazu eingerichtet, einen Abtrieb der Rückstelleinheit 7 mit der Spindel 6 zu koppeln. Das Führungselement 19 erlaubt dabei ein Axialspiel, das so bemessen ist, dass die Drehfixierung der Spindel 6 beim Öffnen und Schließen der Armatur 4 erhalten bleibt. Somit wird die Drehfixierung der Spindel 6 beim ordnungsgemäßen Betrieb der Armatur 4 nicht aufgehoben.

Figur 4 zeigt ein Ausführungsbeispiel einer Stellantriebsanordnung 1, bei dem zur Drehfixierung der Spindel 6 eine Buchse 22 vorgesehen ist. Die Buchse 22 ist dazu eingerichtet und vorgesehen, eine Relativdrehung zwischen der Spindel 6 und der Buchse 22 und zwischen der Spindel 6 und dem Gehäuseteil 26 zu verhindern. Dabei ist die Buchse 22 axial verschieblich in dem Gehäuseteil 26 gelagert und gleichzeitig axial an der Spindel 6 fixiert.

Die Buchse 22 weist eine Innenverzahnung 23 und eine Außenverzahnung 24 auf. Die Innenverzahnung 23 der Buchse 22 steht im Eingriff mit einer korrespondierenden Außenverzahnung 25 der Spindel 6. Die korrespondierenden Verzahnungen 23 und 25 verhindern zuverlässig, dass sich die Spindel 6 relativ zur Buchse 22 dreht. Die Buchse 22 ist axial an der Spindel 6 festgelegt und bewegt sich beim Ein- und Ausfahren der Spindel 6 mit der Spindel 6 innerhalb des Gehäuseteils 26, das die Spindel 6 und die Buchse 22 umgibt.

In dem Gehäuseteil 26 ist eine Innenverzahnung 27 ausgebildet, die korrespondierend zu der Außenverzahnung 24 der Buchse 22 ausgebildet ist und in Eingriff mit der Außenverzahnung 24 steht. Die Außenverzahnung 24 der Buchse 22 und die Innenverzahnung 27 des Gehäuseteils 26 verhindern eine Verdrehung der Buchse 22 innerhalb der Gehäuseteils 26, erlauben jedoch eine axiale Verschiebung der Buchse 22 innerhalb des Gehäuseteils 26.

Die korrespondierenden Verzahnungen 23 und 25 sowie 24 und 27 können auch vergleichsweise hohen Kräften standhalten und stellen eine hohe Drehfestigkeit über den gesamten axialen Verstellbereich der Spindel 6 bereit.

Gemäß den Figuren 3 und 4 ist im Gehäuse 29 jeweils ein Aufnahmeraum 28 vorgesehen, in den die Spindel 6 nachlaufen kann, ohne mit Komponenten der Stellantriebsanordnung 1 zu kollidieren. Ergänzend oder anstelle des Aufnahmeraums 28 könnte auch ein Dämpfungselement verwendet werden, um eine axiale Nachlaufbewegung der Spindel 6 abzudämpfen und eine Kollision der Spindel 6 mit Komponenten der Stellantriebsanordnung 1 zu vermeiden.

Ein Axialhub der Armatur 4 zwischen ihrer Offenstellung und ihrer Schließstellung und ein Axialhub der Spindel 6, der von der Spindel 6 zurückgelegt wird, um die Armatur 4 zwischen ihrer Offenstellung und ihrer Schließstellung zu bewegen, sind so bemessen, dass Kugeln 20 des Kugelgewindetrieb 3 in dem Kugelgewindetrieb 3 keinen vollen Umlauf vollführen können.

Bei den zumindest teilweise in den Figuren 1 bis 3 gezeigten Stellantriebsanordnungen 1 werden die Kugelgewindetriebe 3 somit zum Betätigen einer selbstschließenden, linear betätigen Armatur 4 verwendet. Hierbei ist vorgesehen, eine Mutter 5 des Kugelgewindetrieb 3 zum Öffnen der Armatur 4 elektromotorisch anzutreiben, dadurch eine Spindel 6 des Kugelgewindetrieb 3 translatorisch in Öffnungsrichtung der Armatur 4 zu bewegen und die Armatur 4 dadurch zu öffnen. Zum Schließen der Armatur 4 wird eine lineare Rückstellbewegung, hier eine Entspannungsbewegung, auf die Spindel 6 übertragen. Die Rückstellbewegung kann eine Entspannungsbewegung sein, die durch ein Druckmedium vermittelt wird, das durch die Armatur 4 geschaltet wird. Die Rückstellbewegung kann auch eine Entspannungsbewegung der bereits zuvor erwähnten Rückstelleinheit 7 der zuvor beschriebenen Stellantriebsanordnung 1 sein. Die Rückstelleinheit 7 weist hierzu, wie ebenfalls bereits zuvor ausgeführt wurde, zumindest ein Rückstellelement 8 auf.

Hinter dem Kugelgewindetrieb 3 und zum Teil auch durch den Kugelgewindetrieb 3 kann eine durch die Rückstellbewegung in die Spindel 6 eingeleitete Rückstellkraft zumindest teilweise dissipiert werden. Bei den in den Figuren 1 und 2 dargestellten Stellantriebsanordnungen 1 erfolgt die Dissipation der Rückstellkraft durch die Bremsen 14 und 15 der Bremseinheiten 13 der dargestellten Stellantriebsanordnungen 1.

Am Ende der Rückstellbewegung kann die Spindel 6 weiterlaufen und sich von der Armatur 4 lösen. Bei den in den Figuren gezeigten Ausführungsbeispielen der Stellantriebsanordnungen 1 erfolgt das Ablösen der Spindel 6 an der Schnittstelle 18 zwischen der Spindel 6 und der Rückstelleinheit 7.

Die Figuren 1 und 2 zeigen, dass die Armatur mit einer Leitung 21, beispielsweise eine Pipeline, verbunden ist. Durch die Leitung 21 fließt ein gegebenenfalls unter Druck stehendes Medium, das mit der Armatur 4 geschaltet werden kann. In Schließstellung der Armatur 4 wird ein Durchfluss der Leitung 21 unterbunden. Wird die Armatur 4 über den Kugelgewindetrieb 3 geöffnet, ist die Leitung 21 passierbar.

Gemäß Figur 4 ist ein distales Ende der Spindel 6 von einem Abstreifring 25 umgeben, der ein Einfördern von Schmutz durch die Bewegung der Spindel 6 verhindert.

Die Erfindung befasst sich mit Verbesserungen auf dem technischen Gebiet der Stellantriebe 2. Hierzu wird unter Anderem die Verwendung eines Kugelgewindetriebs 3 zum Betätigen einer selbstschließenden, linear betätigen Armatur 4 vorgeschlagen. Während das Öffnen der Armatur 4 über den Kugelgewindetrieb 3 elektromotorisch mittels eines Stellantriebs 2 erfolgt, wird beim Schließen der selbsttätig schließenden Armatur 4 eine Rückstellbewegung auf die Spindel 6 und von dort auf die Mutter 5 des Kugelgewindetriebs 3 übertragen. Über den Kugelgewindetrieb 3 kann, insbesondere mittels der Fliehkraftbremse 15, die Rückstellbewegung und damit auch eine Schließbewegung der Armatur 4 abgebremst werden, was die Armatur 4 und letztendlich auch den Kugelgewindetrieb 3 und überdies gegebenenfalls weitere Komponenten einer Stellantriebsanordnung 1 vor Beschädigungen schützen und darüber hinaus auch eine Fail-Safe-Funktion begünstigen kann.

### Bezugszeichenliste

- 1: Stellantriebsanordnung
- 2: Stellantrieb
- 3: Kugelgewindetrieb
- 4: Armatur
- 5: Mutter
- 6: Spindel
- 7: Rückstelleinheit
- 8: Rückstellelement
- 9: Antriebsmotor
- 10: Fail-Safe-Einheit
- 11: Drehgeber
- 12: Axiallager
- 13: Bremseinheit
- 14: Arbeitsstrombremse
- 15: Fliehkraftbremse
- 16: Schneckengetriebe
- 17: Planetengetriebe
- 18: Schnittstelle zwischen 6 und 7
- 19: Führungselement
- 20: Kugel
- 21: Leitung
- 22: Buchse
- 23: Innenverzahnung von 22
- 24: Außenverzahnung von 22
- 25: Außenverzahnung von 6
- 26: Gehäuseteil
- 27: Innenverzahnung in 6
- 28: Aufnahmeraum
- 29: Gehäuse

## Patentansprüche

1. Verwendung eines Kugelgewindetriebs (3) zum Betätigen einer selbstschließenden, linear betätigten Armatur (4), wobei eine Mutter (5) des Kugelgewindetriebs (3) zum Öffnen der Armatur (4) elektromotorisch angetrieben wird, um dadurch eine Spindel (6) des Kugelgewindetriebs (3) translatorisch in Öffnungsrichtung der Armatur (4) zu bewegen und die Armatur (4) zu öffnen, und wobei zum Schließen der Armatur (4) eine lineare Rückstellbewegung, insbesondere eine Entspannungsbewegung, auf die Spindel (6) übertragen wird, **dadurch gekennzeichnet, dass** die Spindel (6) am Ende der Rückstellbewegung weiterläuft und sich von einer Verbindung zur Armatur (4) axial löst, wobei eine durch die Rückstellbewegung in die Spindel (6) eingeleitete Rückstellkraft in Kraftrichtung hinter dem Kugelgewindetrieb (3) zumindest teilweise dissipiert wird, nämlich durch eine Fliehkraftbremse (15) eines mit dem Kugelgewindetriebs (3) verbundenen Stellantriebs (2).

2. Verwendung nach dem vorherigen Anspruch, wobei die Rückstellbewegung eine durch ein durch die Armatur (4) geschaltetes Druckmedium vermittelte Entspannungsbewegung und/oder eine Entspannungsbewegung einer Rückstelleinheit (7) ist, insbesondere wobei die Rückstelleinheit (7) zumindest ein Rückstellelement (8), insbesondere eine Feder umfasst.

3. Verwendung nach einem der vorherigen Ansprüche, wobei eine durch die Rückstellbewegung in die Spindel (6) eingeleitete Rückstellkraft in Kraftrichtung durch den Kugelgewindetrieb (3) zumindest teilweise dissipiert wird, insbesondere durch eine Bremse (14, 15), beispielsweise durch eine Bremse (14, 15) eines mit dem Kugelgewindetriebs (3) verbundenen Stellantriebs (2).

4. Stellantriebsanordnung (1) mit einem Stellantrieb (2), einem mit dem Stellantrieb (2) angetriebenen Kugelgewindetrieb (3), und mit einer linear betätigten Armatur (4), wobei der Kugelgewindetrieb (3) eine Mutter (5) und eine zumindest mittelbar mit der Armatur (4) verbindbare oder verbundene Spindel (6) umfasst, wobei die Armatur (4) mittels einer in Öffnungsrichtung der Armatur (4) gerichteten Öffnungsbewegung der über den Stellantrieb (2) und die Mutter (5) angetriebenen Spindel (6) öffenbar und mittels einer in Schließrichtung der Armatur (4) auf die Spindel (6) wirkenden, von einer Rückstelleinheit (7) verursachten Rückstellbewegung schließbar ist, **dadurch gekennzeichnet, dass** die Stellantriebsanordnung (1), insbesondere der Stellantrieb (2), eine Bremseinheit (13) aufweist, die eine Fliehkraftbremse (15) umfasst, und dass zwischen dem Kugelgewindetrieb (3), insbesondere der Spindel (6), und der Rückstelleinheit (7) eine lösbare Schnittstelle (18) ausgebildet ist, die beim Schließen und/oder Öffnen der Armatur (4) öffenbar ist.

5. Stellantriebsanordnung (1) nach dem vorherigen Anspruch, wobei die Rückstelleinheit (7) zumindest ein Rückstellelement (8), insbesondere zumindest eine Rückstellfeder aufweist, und wobei die Rückstellbewegung eine Rückstellbewegung oder eine Entspannungsbewegung des zumindest einen Rückstellelements (8) ist.

6. Stellantriebsanordnung (1) nach einem der vorherigen Ansprüche, wobei die Rückstelleinheit (7) und der Stellantrieb (2) in eine Fail-Safe-Einheit (10) integriert sind, und/oder wobei die Stellantriebsanordnung (1), insbesondere der Stellantrieb (2), Endanschläge und/oder Enlagenschalter für die Armatur (4) aufweist.

7. Stellantriebsanordnung (1) nach einem der vorherigen Ansprüche, wobei die Stellantriebsanordnung (1), insbesondere der Stellantrieb (2), einen Drehgeber (11) zur Erfassung von Endlagen der Armatur (4) aufweist, insbesondere wobei der Drehgeber (11) zum zumindest indirekten Abgreifen einer Drehbewegung der Mutter (5) und zur Umwandlung in eine auf Endanschläge und/oder Endlagenschalter wirkende Linearbewegung eingerichtet ist.

8. Stellantriebsanordnung (1) nach einem der vorherigen Ansprüche, wobei die Mutter (5) des Kugelgewindetriebs (3) mittels zumindest eines Axiallagers (12) gelagert ist, das zur Aufnahme von durch die Rückstellbewegung, insbesondere beim Öffnen und/oder Schließen der Armatur (4), auf die Spindel (6) übertragenen Axialkräften eingerichtet ist.

9. Stellantriebsanordnung (1) nach einem der vorherigen Ansprüche, wobei die Spindel eine Gewindesteigung von 16 Millimetern aufweist.

10. Stellantriebsanordnung (1) nach einem der vorherigen Ansprüche, wobei die Bremseinheit (13) eine Arbeitsstrombremse (14) umfasst.

11. Stellantriebsanordnung (1) nach einem der vorherigen Ansprüche, wobei zwischen einem Antriebsmotor (9) des Stellantriebs (2) und dem Kugelgewindetrieb (3) ein Getriebe, insbesondere ein Planetengetriebe (17) und/oder ein Schneckengetriebe (16), angeordnet ist, vorzugsweise wobei das Getriebe nicht selbsthemmend ist.

12. Stellantriebsanordnung (1) nach einem der vorherigen Ansprüche, wobei zwischen dem Kugelgewindetrieb (3), insbesondere der Spindel (6), und der Rückstelleinheit (7) eine lösbare Schnittstelle (18) ausgebildet ist, die beim Schließen und/oder Öffnen der Armatur (4) öffenbar ist, nämlich durch in Schließrichtung und/oder in Öffnungsrichtung wirkende Zugkräfte, und/oder die zur Übertragung von Druckkräften in Schließrichtung und in Öffnungsrichtung eingerichtet ist.

13. Stellantriebsanordnung (1) nach einem der vorherigen Ansprüche wobei die Stellantriebsanordnung (1), insbesondere die Schnittstelle (18), zur Drehfixierung der Spindel (6) eingerichtet ist, insbesondere wobei die Schnittstelle (18) ein Führungselement (19) aufweist, das einen Abtrieb der Rückstelleinheit (7) mit der Spindel (6) koppelt, vorzugsweise wobei das Führungselement (19) ein Axialspiel aufweist, das so bemessen ist, dass die Drehfixierung beim Öffnen und Schließen der Armatur (4) erhalten bleibt.

14. Stellantriebsanordnung (1) nach einem der vorherigen Ansprüche, wobei die Stellantriebsanordnung (1) zur Drehfixierung der Spindel (6) eine in einem Gehäuseteil (26) der Stellantriebsanordnung (1) drehfixierte Buchse (22) aufweist, die eine Relativdrehung zwischen der Spindel (6) und/oder der Buchse (22) und/oder zwischen der Spindel (6) und dem Gehäuseteil (26) verhindert, vorzugsweise wobei die Buchse (22) axial verschieblich in dem Gehäuseteil (26) gelagert und/oder axial an der Spindel (6) fixiert ist.

15. Stellantriebsanordnung (1) nach einem der vorherigen Ansprüche, wobei ein Axialhub der Armatur (4) zwischen ihrer Offenstellung und ihrer Schließstellung und/oder ein Axialhub der Spindel (6) so bemessen ist, dass Kugeln (20) des Kugelgewindetriebs (3) in dem Kugelgewindetrieb (3) keinen vollen Umlauf vollführen können.

## Claims

1. Use of a ball screw drive (3) for activating a self-closing, linearly activated fitting (4), wherein a nut (5) of the ball screw drive (3) for opening the fitting (4) is driven by an electric motor so as to thereby move in a translatory manner a spindle (6) of the ball screw drive (3) in the opening direction of the fitting (4) and to open the fitting (4), and wherein for closing the fitting (4) a linear restoring movement, in particular a relaxing movement, is transmitted to the spindle (6), **characterized in that** the spindle (6) at the end of the restoring movement continues to run and is axially released from a connection to the fitting (4), wherein a restoring force that has been introduced into the spindle (6) by the restoring movement, in the direction of force, is at least partially dissipated behind the ball screw drive (3), specifically by a centrifugal brake (15) of an actuating drive (2) connected to the ball screw drive (3) .

2. Use according to the preceding claim, wherein the restoring movement is a relaxing movement which is imparted by a pressurized medium that is switched by the fitting (4), and/or a relaxing movement of a restoring unit (7), in particular wherein the restoring unit (7) comprises at least one restoring element (8), in particular a spring.

3. Use according to one of the preceding claims, wherein a restoring force that has been introduced into the spindle (6) by the restoring movement, in the direction of force, is at least partially dissipated by the ball screw drive (3), in particular by a brake (14, 15), for example by a brake (14, 15) of an actuating drive (2) connected to the ball screw drive (3).

4. Actuating drive assembly (1) having an actuating drive (2), a ball screw drive (3) which is driven by the actuating drive (2), and having a linearly activated fitting (4), wherein the ball screw drive (3) comprises a nut (5) and a spindle (6) which is at least indirectly connectable or connected to the fitting (4), wherein the fitting (4) is able to be opened by means of an opening movement of the spindle (6), which is driven by way of the actuating drive (2) and the nut (5), directed in the opening direction of the fitting (4), and is able to be closed by means of a restoring movement which in the closing direction of the fitting (4) acts on the spindle (6) and is caused by a restoring unit (7), **characterized in that** the actuating drive assembly (1), in particular the actuating drive (2), has a brake unit (13) which comprises a centrifugal brake (15), and **in that** a releasable interface (18) which is able to be opened when closing and/or opening the fitting (4) is configured between the ball screw drive (3), in particular the spindle (6), and the restoring unit (7).

5. Actuating drive assembly (1) according to the preceding claim, wherein the restoring unit (7) has at least one restoring element (8), in particular at least one restoring spring, and wherein the restoring movement is a restoring movement or relaxing movement of the at least one restoring element (8).

6. Actuating drive assembly (1) according to one of the preceding claims, wherein the restoring unit (7) and the actuating drive (2) are integrated in a fail-safe unit (10), and/or wherein the actuating drive assembly (1), in particular the actuating drive (2), has terminal detents and/or terminal switches for the fitting (4).

7. Actuating drive assembly (1) according to one of the preceding claims, wherein the actuating drive assembly (1), in particular the actuating drive (2), has a rotary encoder (11) for detecting terminal positions of the fitting (4), in particular wherein the rotary encoder (11) is specified for at least indirectly ascertaining a rotating movement of the nut (5) and for converting said rotating movement into a linear movement acting on terminal detents and/or terminal switches.

8. Actuating drive assembly (1) according to one of the preceding claims, wherein the nut (5) of the ball screw drive (3) is mounted by means of at least one axial bearing (12) which is specified for absorbing axial forces that are transmitted to the spindle (6) by the restoring movement, in particular when opening and/or closing the fitting (4).

9. Actuating drive assembly (1) according to one of the preceding claims, wherein the spindle has a thread pitch of 16 millimeters.

10. Actuating drive assembly (1) according to one of the preceding claims, wherein the brake unit (13) comprises an operating current brake (14).

11. Actuating drive assembly (1) according to one of the preceding claims, wherein a gearbox, in particular a planetary gear (17) and/or a worm gear (16) are/is disposed between a drive motor (9) of the actuating drive (2) and the ball screw drive (3), preferably wherein the gearbox is not self-locking.

12. Actuating drive assembly (1) according to one of the preceding claims, wherein a releasable interface (18) is configured between the ball screw drive (3), in particular the spindle (6), and the restoring unit (7), said releasable interface (18) being able to be opened when closing and/or opening the fitting (4), specifically by tensile forces acting in the closing direction and/or in the opening direction, and/or said releasable interface (18) being specified for transmitting compressive forces in the closing direction and in the opening direction.

13. Actuating drive assembly (1) according to one of the preceding claims, wherein the actuating drive assembly (1), in particular the interface (18), is specified for rotationally fixing the spindle (6), in particular wherein the interface (18) has a guide element (19) which couples a drive output of the restoring unit (7) to the spindle (6), preferably wherein the guide element (19) has axial play which is of such a dimension that the rotational fixing is maintained when opening and closing the fitting (4).

14. Actuating drive assembly (1) according to one of the preceding claims, wherein the actuating drive assembly (1) for rotationally fixing the spindle (6) has a bush (22) which is rotationally fixed in a housing part (26) of the actuating drive assembly (1) and prevents relative rotation between the spindle (6) and/or the bush (22) and/or between the spindle (6) and the housing part (26), preferably wherein the bush (22) is mounted so as to be axially displaceable in the housing part (26) and/or is axially fixed to the spindle (6).

15. Actuating drive assembly (1) according to one of the preceding claims, wherein an axial stroke of the fitting (4) between the open position thereof and the closed position thereof, and/or an axial stroke of the spindle (6), are/is of such a dimension that balls (20) of the ball screw drive (3) cannot perform a complete recirculation in the ball screw drive (3).

## Revendications

1. Utilisation d'une vis à billes (3) pour actionner une vanne à fermeture automatique et à actionnement linéaire (4), dans laquelle un écrou (5) de la vis à billes (1) est entraîné par moteur électrique pour ouvrir la vanne (4), en déplaçant une broche (6) de la vis à bille (3) en translation dans le sens d'ouverture afin d'ouvrir la vanne (4), et dans laquelle un mouvement de rappel linéaire, en particulier un mouvement de détente, est transmis à la broche (6) pour fermer la vanne (4), **caractérisée en ce que** la broche (6) poursuit sa course à la fin du mouvement de rappel et se détache axialement d'une liaison avec la vanne (4), une force de rappel introduite dans la broche (6) par le mouvement de rappel derrière la vis à billes (3) dans le sens de la force étant au moins partiellement dissipée, notamment par un frein centrifuge (15) d'un actionneur (2) relié à la vis à billes (3).

2. Utilisation selon la revendication précédente, dans laquelle le mouvement de rappel est un mouvement de détente transmis par un élément de pression connecté et/ou un mouvement de détente d'une unité de rappel (7), en particulier l'unité de rappel (7) comprenant un élément de rappel (8), en particulier un ressort.

3. Utilisation selon une des revendications précédentes, dans laquelle une force de rappel introduite dans la broche (6) par le mouvement de rappel derrière la vis à billes (3) dans le sens de la force est au moins partiellement dissipée, en particulier par un frein (14, 15), par exemple par un frein (14, 15) d'un actionneur (2) relié à la vis à billes (3).

4. Dispositif à actionneur (1) avec un actionneur (2), une vis à billes (3) entraînée avec l'actionneur (2), et avec une vanne (4) à actionnement linéaire, dans lequel la vis à billes (3) comprend un écrou (5) et au moins une broche (6) reliée ou pouvant être reliée au moins indirectement à la vanne (4), laquelle vanne (4) peut être ouverte par le biais d'un mouvement d'ouverture de la broche (6) entrainée par l'actionneur (2) et l'écrou (5) dirigé dans la direction d'ouverture de la vanne (4) et peut être fermée par le biais d'un mouvement de rappel provoqué par une unité de rappel (7) agissant sur la broche dans la direction de fermeture de la vanne (4), **caractérisé en ce que** ce dispositif d'actionneur (1), en particulier l'actionneur (2), comporte une unité de freinage (13) qui contient un frein à force centrifuge (15) et qu'entre la vis à billes (3), en particulier la broche (6), et l'unité de rappel (7) est configurée une interface libérable (18) qui peut être ouverte lors de la fermeture et/ou de l'ouverture de la vanne (4).

5. Dispositif à actionneur (1) selon la revendication précédente, dans lequel l'unité de rappel (7) comporte au moins un élément de rappel (8), en particulier au moins un ressort de rappel, et dans lequel le mouvement de rappel est un mouvement de rappel ou un mouvement de détente de l'au moins un élément de rappel (8).

6. Dispositif à actionneur (1) selon une des revendications précédentes, dans lequel l'unité de rappel (7) et l'actionneur (2) sont intégrés dans une unité de sécurité (10), et/ou lequel dispositif à actionneur (1), en particulier l'actionneur (2), comporte des butées d'extrémité et/ou des commutateurs de fin de course pour la vanne (4).

7. Dispositif à actionneur (1) selon une des revendications précédentes, lequel dispositif à actionneur (1), en particulier l'actionneur (2), comporte un capteur rotatif (11) pour détecter les butées d'extrémité de la vanne (4), en particulier ce capteur rotatif (11) étant configuré pour capturer au moins indirectement un mouvement de rotation de l'écrou (5) et pour le convertir en un mouvement linéaire agissant sur les butées d'extrémité et/ou les commutateurs de fin de course.

8. Dispositif à actionneur (1) selon une des revendications précédentes, dans lequel l'écrou (5) de la vis à billes (3) est monté au moyen d'au moins un palier axial (12) qui est agencé pour accueillir des forces axiales transmises à la broche (6) par les mouvements de rappel, en particulier lors de l'ouverture et/ou de la fermeture de la vanne (4).

9. Dispositif à actionneur (1) selon une des revendications précédentes, dans lequel la broche comporte un pas de filetage de 16 millimètres.

10. Dispositif à actionneur (1) selon une des revendications précédentes, dans lequel l'unité de freinage (13) comporte un frein à courant de travail.

11. Dispositif à actionneur (1) selon une des revendications précédentes, dans lequel un engrenage, en particulier un engrenage planétaire (17) et/ou un engrenage à vis sans fin (16), est agencé entre le moteur d'entraînement (9) de l'actionneur (2) et la vis à billes (3), de préférence cet engrenage n'étant pas autobloquant.

12. Dispositif à actionneur (1) selon une des revendications précédentes, dans lequel, entre la vis à billes (3), en particulier la broche (6), et l'unité de rappel (7), est constituée une interface libérable (18) qui peut être ouverte lors de la fermeture et/ou de l'ouverture de la vanne (4), notamment par des forces de traction agissant dans le sens de la fermeture et/ou dans le sens de l'ouverture, et/ou qui est agencée pour transmettre des forces de pression dans la direction de la fermeture et dans la direction de l'ouverture.

13. Dispositif à actionneur (1) selon une des revendications précédentes, lequel dispositif à actionneur (1), en particulier l'interface (18), est configuré pour la fixation par rotation de la broche (6), en particulier l'interface (18) comportant un élément de guidage (19) qui accouple un arbre de sortie de l'unité de rappel (7) avec la broche (6), cet élément de guidage (19) présentant de préférence un jeu axial qui est dimensionné pour que la fixation par rotation soit maintenue lors de l'ouverture et de la fermeture de la vanne (4).

14. Dispositif à actionneur (1) selon une des revendications précédentes, lequel dispositif à actionneur (1) comporte, pour la fixation par rotation de la broche (6), une douille (22) fixée par rotation dans un élément de boîtier (26) du dispositif à actionneur (1), qui empêche un mouvement relatif entre la broche (6) et/ou la douille (22) et/ou entre la broche (6) et l'élément de boîtier (26), cette douille (22) étant de préférence montée de façon coulissante axialement dans l'élément de boîtier (26) et/ou fixée axialement sur la broche (6).

15. Dispositif à actionneur (1) selon une des revendications précédentes, dans lequel une course axiale de la vanne (4) entre sa position d'ouverture et sa position de fermeture et/ou une course axiale de la broche (6) sont dimensionnées de telle sorte que les billes (20) de la vis à billes (3) ne peuvent pas effectuer un tour complet dans la vis à billes (3).
